**Europäisches Patentamt**

**European Patent Office**

**Office européen des brevets**

(19)

(11) Publication number : **0 413 689 B1**

## (12) EUROPEAN PATENT SPECIFICATION

(45) Date of publication of patent specification :
**12.08.92 Bulletin 92/33**

(51) Int. Cl.⁵ : **B23K 1/08,** H05K 3/34

(21) Application number : **88910014.5**

(22) Date of filing : **28.10.88**

(86) International application number :
**PCT/EP88/00989**

(87) International publication number :
**WO 89/10230 02.11.89 Gazette 89/26**

(54) **WAVESOLDERING DEVICE.**

(30) Priority : **19.04.88 IT 2024488**

(43) Date of publication of application :
**27.02.91 Bulletin 91/09**

(45) Publication of the grant of the patent :
**12.08.92 Bulletin 92/33**

(84) Designated Contracting States :
**CH DE FR GB LI NL**

(56) References cited :
**EP-A- 159 425**
**EP-A- 201 158**
**EP-A- 203 623**

(73) Proprietor : **ITALTEL SOCIETA ITALIANA**
**TELECOMUNICAZIONI s.p.a.**
**P.le Zavattari, 12**
**I-20149 Milano (IT)**

(72) Inventor : **SCORTA, Roberto**
**Via L. Biraghi, 18**
**I-20159 Milan (IT)**

(74) Representative : **Giustini, Delio**
**c/o Italtel Società Italiana Telecomunicazioni**
**s.p.a. P.O. Box 10**
**I-20019 Settimo Milanese (MI) (IT)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 413 689 B1

# Description

This invention relates to a wavesoldering device according to the preamble of claim 1.

As known the wavesoldering methods and devices provide that the printed circuit boards are conveyed towards one or more waves of molten solder (it is usually used a tin/lead solder melted by means of heating) which "bath" the feet (or the rheophores) of the components laying on the boards as well as the bonding areas therefor arranged. Once the solder gets cold, the feet are soldered to the surface of the boards.

On the wavesoldering field, the reduction of the scruffs is a very important problem: in fact the scruffs make worse the soldering quality and must be removed from time to time reducing the productivity of the soldering device. The above problem, well known to all people skilled in the art, has been solved by making the soldering wave as flat as possible and by limiting the height of the jump of the molten solder.

The coming of the surface mounting components (known as "SMD") has caused some technical problems which are known in the relevant art as "dry soldering" or as "solder skips". The method and the device according to the invention are hereinafter described referring to the soldering of SMD units by means of a single wave device, but it can be successfully used for the soldering of any components by means of either a single wave or a double wave device.

The surface mounting units are characterized in that the feet are so shaped as to allow the soldering on the same face of the printed circuit where the components are placed.

The phenomenon known as "dry soldering" occurs when air and/or gas bubbles are trapped between two contiguous components, i.e. near to a component, and inhibit the molten solder from bathing the component's terminals and the bonding areas, even when the component remains in contact with the wave for a long period of time.

EP-A- 159.425 (on which is based the preamble of claim 1) discloses a device for the wavesoldering of printed circuit boards, wherein a wave of molten solder, produced at the output of a riser defined by two facing walls in a solder well through pumping means, baths the boards as well as components mounted thereon, and comprises means located at the output of a said riser for dividing at least a portion of the soldering wave into a plurality of elementary jets. To the soldering wave a reciprocating motion is imparted and the soldering wave directly falls down into the main tank so that although a certain reduction of the soldering failures due to dry soldering is achieved, there is an increase of the scruff formation speed which decreases the productivity of the soldering device.

EP-A- 203.623 in the name of the same Applicant discloses a wavesoldering device in which a transversely elongated wave of molten solder is subjected to an orbital movement substantially along the main dimension of said elongated wave.

Such device allows for the removal of the air/gas bubbles from any side of the component only when the components are sufficiently spaced apart from each other, and without an appreciable increase of the scruffs formation.

Within the meaning of the present invention, the term "orbital movement" means a periodic, either circular or elliptic movement accomplished by a rigid body under the action of rotating eccentric means or other device.

EP-A- 201.158 theaches to impart a reciprocating motion to an undivided soldering wave and provides for a weir plate to one side of the wave and practically concentrates the whole mass of returning solder into a sort of solder-fall jumping into a guide. Therefore this document does not teach to reduce the scruff formation nor to prevent the dry soldering effects, particularly for the SMD technique.

The object of the present invention is to provide a wave soldering device that substantially overcomes the above mentioned problems of scruffs formation and soldering.

This object is achieved by the invention consisting of a device for the wavesoldering of printed circuit boards, wherein a wave of molten solder, produced at the output of a riser defined by two facing walls in a solder well through pumping means, baths said boards as well as components mounted thereon, comprising means located to the output of said riser for dividing at least a portion of the soldering wave into a plurality of elementary jets, characterized in that said riser is located within an auxiliary solder collecting tank formed by two additional downward converging walls and communicating with the main solder well through openings, the average solder level of the said collecting tank being higher than the level of said main tank, and in that said wave dividing means is located within the soldering wave and further comprises at least one elongated member connected to eccentric means driven by a motor for imparting an orbital motion to each of said elementary jets.

The invention provides therefore for the presence of means for dividing the wave into a plurality of molten solder jets, each of which has an orbital movement.

According to a preferred embodiment of the invention the orbital movement of the molten solder jets can be obtained by a body which can be crossed by the molten solder jets in vertical direction and eccentric disks.

When said eccentric disks rotate, the body joined to it performs an orbital movement which on its turn set the molten solder jets crossing it in a horizontal orbital movement.

As the direction of said horizontal movement cyclically varies between 0 and 360 degrees, the air/gas bubbles are removed in any position they are.

Further characteristics of the invention can be taken from the below description which refers to a non-limiting example shown in the enclosed drawings in which:

– fig. 1 schematically shows a device for the wavesoldering according to the present invention;

– fig. 2 shows in details the wavesoldering device 5 of fig. 1;

– fig. 3 illustrates the diagrams of the forces which act on the molten solder jets according to the invention;

– fig. 4 is a view schematically showing a first example of the wavesoldering device 5 of fig. 1, implemented according to the invention;

– fig. 5 is a view schematically showing a second example of a wavesoldering device 5 of fig. 1, according to the invention;

– fig. 6 schematically shows a third embodiment of the wavesoldering unit 5 of fig. 1, according to the invention;

– fig. 7 illustrates a second example of a body 15 of fig. 2, 4, 5 and 6;

– fig. 8 illustrates a third example of body 15 of fig. 2, 4, 5 and 6.

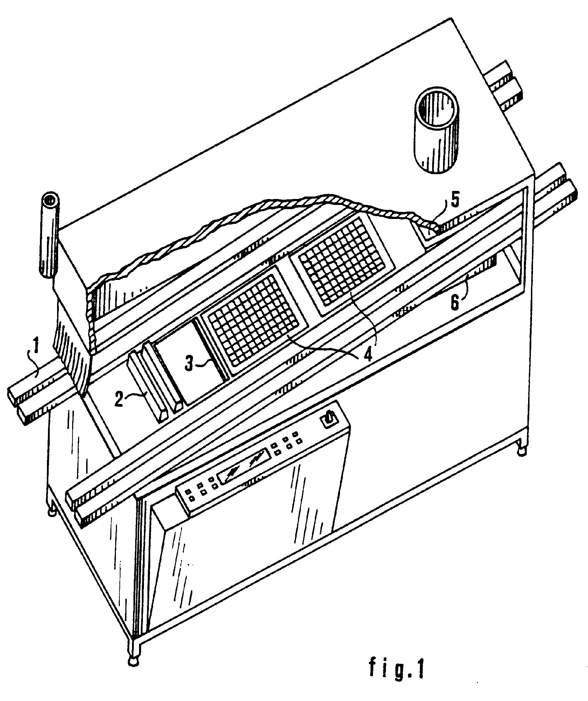

Fig. 1 shows a wavesoldering device so shaped as to comprise:

– a transport unit 1, suitable to drive the printed circuit boards, where the components to be soldered are mounted, towards the functional units hereinafter listed, everyone of them performing a defined processing;

– a flux unit 2, suitable to spray deoxidizing fluids (known as flux oils) in order to eliminate the oxide from the parts which are interested by the soldering process and to improve the "wettability";

– a drying unit 3, suitable to eliminate the diluent contained in the fuxing oils deposited on the printed circuit boards;

– a preheating unit 4, suitable to increase the temperature of the printed circuit boards up to an optimal value to the extent of the perfomance of the soldering process;

– a soldering unit 5, suitable to produce one or more soldering waves which baths the printed circuit boards causing the soldering of the components there located.

The unit of fig. 1 has been naturally cited as a non-limiting example, as the device according to the invention can be applied to any wavesoldering unit (table- or bench type), using in total or partially the functional units mentioned above.

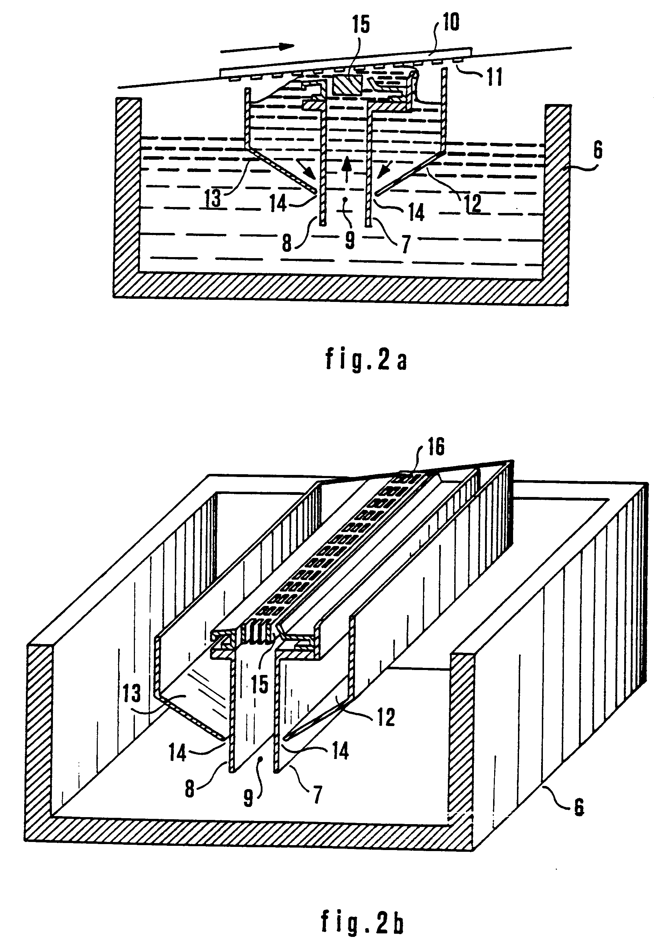

Figure 2a illustrates a section of the soldering unit 5, perpendicular to the main axis of the wave produced, in order to point out the travel path along which the molten solder moves following to the operation of pumping means, here not illustrated as they are well known.

Figure 2b shows an axonometry of the soldering unit 5 without the molten solder, in order to evidence the configuration of the elements which compose it.

Figures 2a and 2b show that a couple of walls 7 and 8 are located inside the well 6 and delimit a duct 9 through which the solder, in a fluid state, flows operated by the pumping means. The pumping means forces the molten solder along the duct 9 and it comes out from the upper opening, creating in this way a wave towards which the printed circuit boards 10, with their components 11, are conveyed.

In order to limit the height of the jump of the molten solder at its fall back to well 6 (and to contain the scruffs due to the solder oxidation), a further pair of walls 12 and 13 are placed next to the external side of the walls 7 and 8 which delimit the duct 9.

The walls 12 and 13 are so shaped as to contain the molten solder and to allow a gradual transfer into the well 6 through an opening 14 provided between the lower end of the walls 12 and 13 and the external sides of walls 7 and 8.

Figures 2a and 2b illustrate the soldering device, which is purpose of the present invention. According to the invention, the soldering wave is formed by a plurality of molten solder jets, having an orbital movement.

Said jets may be obtained by locating a body 15, provided with a plurality of openings 16, into the duct 9 and giving to said body 15 an orbital movement. Openings 16 on body 15 splits the wave into a plurality of jets which are parts of the soldering wave: when body 15 makes an orbital movement, the same movement is transmitted to the molten solder jets, each of which produces a whirling movement on the flat surface of the soldering wave, surrounding the components mounted on the printed boards and removing said air/gas bubbles from any side of the component.

From the same figure 2 it is possible to note that body 15 has a width slightly inferior to the opening of duct 9, thus allowing to have a wave completely formed by molten solder jets, each of which has an orbital movement. According to the invention it is even possible to enlarge the opening of the duct in order to have a wave with a portion formed according to the invention (i.e. formed by molten solder jets having an orbital movement), while the remaining portion is of traditional type.

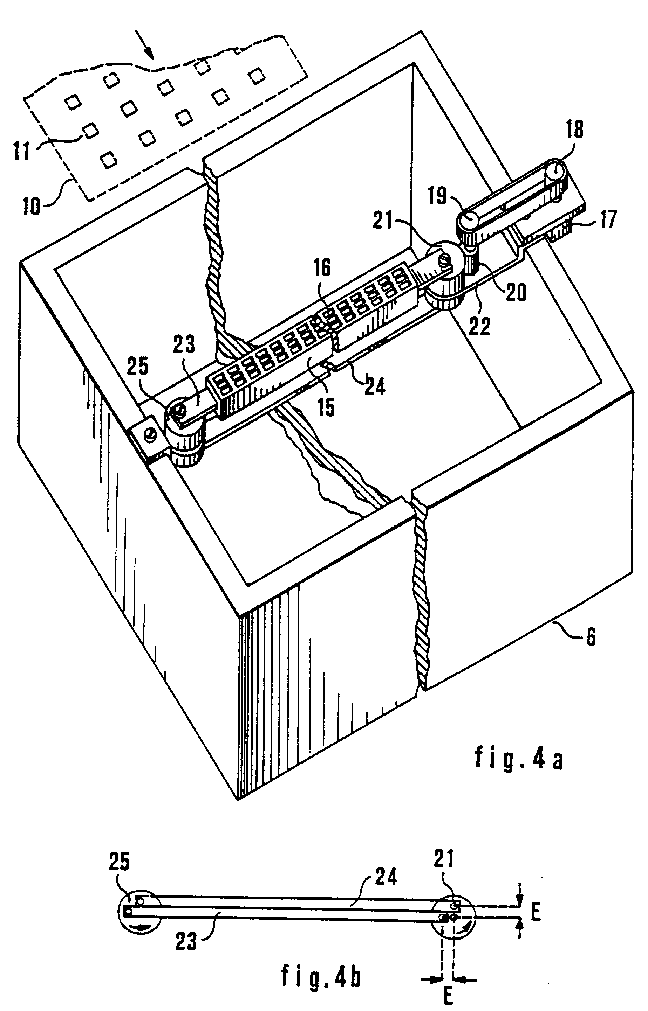

Figure 3a shows a diagram of the forces which operate on the molten solder flowing through said openings 16. In particular it is possible to note that each of said molten solder jets has a vertical movement component V (caused by the pumping means) and a horizontal movement component O (produced by the walls of said openings 16 when body 15 has an orbital movement).

The direction of said horizontal component cyclically varies between 0 and 360°, as shown in figure 3b. With said component a force F is reached, which impress a thrust to the air/gas bubbles near one of the common components 11 progressins in a direction cyclically variable as shown in figure 3c.

It results that the air/gas bubbles are removed in any position they are.

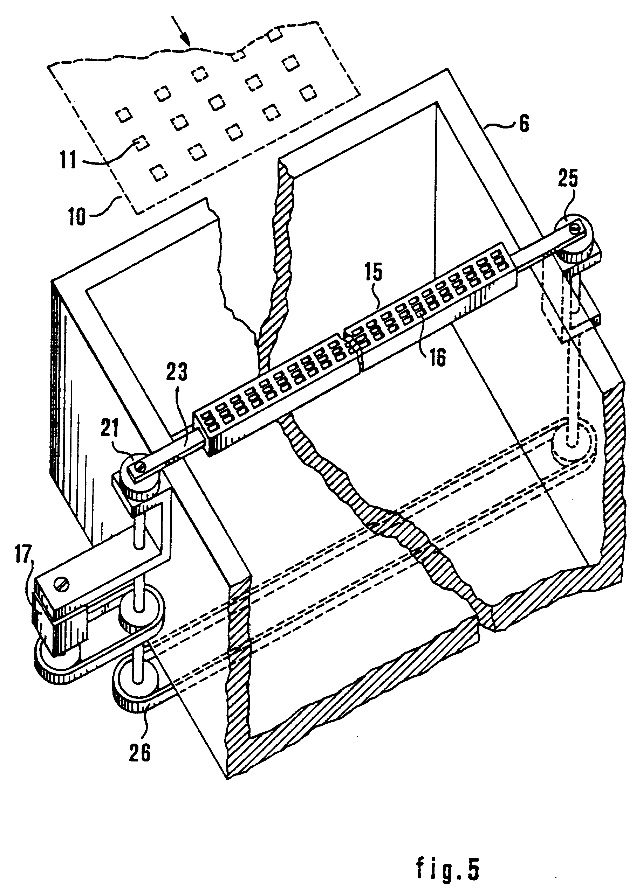

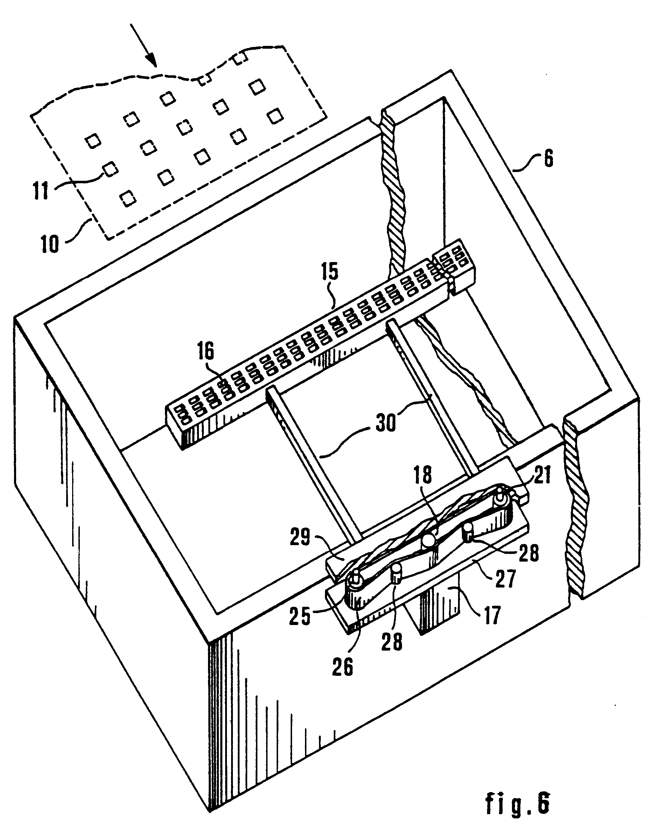

Figure 4 schematically shows a first embodiment of the soldering unit 5, implemented according to the invention. In said figure 4, as well in figures 5 and 6, the walls 12 and 13 are not illustrated due to graphic reasons. On the other hand the transport means provided for the orbital movement of body 15 are illustrated in detail: said means are associated to well 6 and include a motor 17 suitable to cause the rotation of the corresponding shaft 18, which is joined through transmission means (such as belt), to a second shaft 19, on which a gear 20 is mounted.

Gear 20 is joined to a first eccentric disk 21 which is supported by a bracket 22 and swings around its corresponding axis.

On the upper side, respectively on the lower side, of the first eccentric disk 21, a first connecting rod 23 is mounted, respectively a second rod 24, staggered among themselves of 90° as better and schematically shown in figure 4b, Connecting rods 23 and 24 are joined to a second eccentric disk 25, which swings around its axis dragged by the first eccentric disk 21, by means of connecting rods 23 and 24.

The eccentricity E of said first and second eccentric disk 21 and 25 is equal to a predetermined value which corresponds to 2,5 mm about.

The first connecting rod 23 supports said body 15 provided by a plurality of openings 16, while the second connecting rod 24 must assure the rotation of the second eccentric disk 25 even if the first connecting rod 23 should stop near its dead center. As the first and second connecting rod are staggered among themselves of 90°, if the eccentric disks should stop according to the position of figure 4b (the first rod 23 is near its dead center), the rotation of the eccentric disk 25 is assured by a second rod 24 which - in said position - works under the maximum mating condition.

When motor 17 causes the rotation of eccentric disk 21 and 25, body 15 moves according to a direction having a variable amplitude according to the eccentricity E value: the molten solder jets, coming out from said openings 16, progress in a plurality of orbits which move around single components 11, mounted on printed board 10. According to the invention and to the embodiment of figure 4, as well as to the embodiments of figures 5 and 6, it is possible to use a single eccentric disk and/or means in anyway suitable to cause an orbital movement.

Figure 5 shows a second embodiment of the unit implemented according to the invention, where the transport means, unlike the unit in figure 4, are located outside well 6.

More in particular it is possible to see two eccentric disks which operate as eccentric disks 21 and 25 of figure 4a and are therefore marked with the same numbers. The rotation of said eccentric disks is caused by a motor 17 through one or two belts 26: at least one of said belts - crossing well 6 - operates either on eccentric disk 21 or on eccentric disk 25 through a relevant shaft. The connecting rod 23 which supports body 15 provided with opening 16 is joined to said eccentric disks 21 and 25.

The second connecting rod 24 is therefore non-essential, as the second eccentric disk 25 is directly operated by motor 17 and the problems mentioned above, for the embodiment where the second eccentric disk 25 is driven by the first eccentric disk 21, do not occur.

Even in this case the rotation of motor 17 causes the movement in orbital direction of body 15, which causes the same movement to the molten solder jets coming out from openings 16. Said jets determine the removal of gas bubbles near components 11.

Figure 6 shows a third embodiment of the wavesoldering unit according to the invention, where the transport means are placed on the rear surface of well 6 in relation to the feed direction of printed circuits 10. It is to note that motor 17 is in this case supported by a bracket 27, placed on the rear side of the well, and the corresponding eccentric disk causes the rotation of a shaft 18 which drives a belt 26. This latter is stretched by a couple of pins 28 (having the function to increase the working angle of the shaft 18 on belt 26) and causes the rotation of two eccentric disks 21 and 25, to which a longitudinal body 29 is connected. Body 15 is anchored to said body by means of one or more arms 30.

When motor 17 is operated, a rotation of eccentric disks 21 and 25 is registered, which causes the orbital movement of the longitudinal body 24. This latter, by means of arms 30, transfers the orbital movement to body 15 provided with openings 16, which on its turn causes the same movement of the molten solder jets which come out from openings 16.

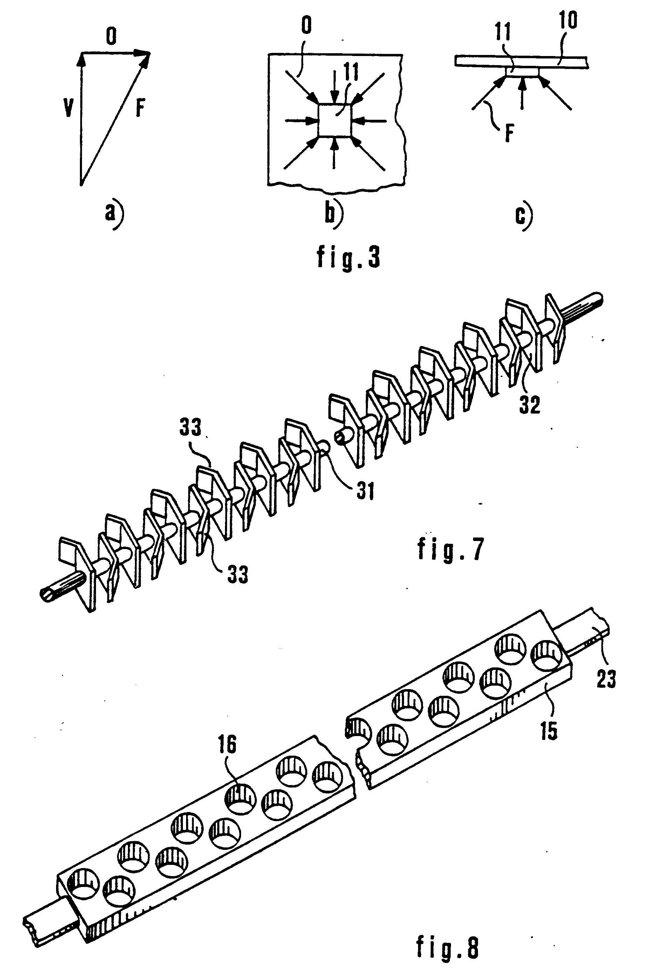

Figure 7 shows a second embodiment of body 15 where, unlike the previous embodiment, it is implemented by assembling, by means of an arm 31, a plurality of plates 32 having the edge perpendicular to the surface of the printed circuit boards, provided with tongues 33, bended according to a predetermined angle. According to a preferred embodiment said tongues have a bending of 60° about and are alternatively placed with the bending towards right side or left side.

When said body moves forward, tongues 33 drives the molten solder jets in spiral direction, which is formed by a combination among the orbital movement of said body, the vertical movement caused by the pumping means and the lateral one caused by the tongues. Using therefore the body of figure 7, a further movement comes up, caused by the bending of tongues 33.

Figure 8 shows a further implementation of body 15 formed by a plate on which a plurality of circular holes 16 are made.

When a body 15, implemented according to figure 8, is used, the force diagrams illustrated in figure 3 are very accurate and the horizontal vector O of figure 3b and 3c has the same value on each direction. Naturally the lenght of said vectors slightly differs among themselves making use of a body 15 having the openings 16 a square or rectangular shape.

In order to adapt the device to the different type of components to be soldered, the invention provides for the adjustment of the speed of rotation of motor 17 (and consequently the revolving speed of the molten solder jets) as well as of the orbit amplitude of the solder jets. This latter parameter may be modified adjusting the value of said eccentricity E of said eccentric disks 21 and 25 by screw means.

The embodiments described above provide for circular orbit. According to the invention it is therefore possible to move body 15 in an elliptic movement (instead of a circular one) allowing to get results comparable with the ones of a circular movement.

According to what stated above it is clear that the device according to the invention causes the removal of air/gas bubbles from any position and the elimination of soldering failures due to dry soldering.

**Claims**

1. A device for the wavesoldering of printed circuit boards, wherein a wave of molten solder, produced at the output of a riser defined by two facing walls (7, 8) in a solder well (6) through pumping means, baths said boards (1) as well as components mounted thereon, comprising means located at the output of said riser for dividing at least a portion of the soldering wave into a plurality of elementary jets, characterized in that said riser is located within an auxiliary solder collecting tank formed by two additional downward converging walls (12, 13) and communicating with the main solder well (4) through openings (14), the average solder level of the said collecting tank (12, 13) being higher than the level of said main tank (6); and in that said wave dividing means is located within the soldering wave and further comprises at least one elongated member (31, 23) connected to eccentric means driven by a motor for imparting an orbital motion to each of said elementary jets.

2. A device as claimed in claim 1, characterized in that said elongated member (31) is an arm carrying a plurality of shaped plates (32) comprising a portion laying in a plane substantially orthogonal to the surfaces of said printed circuit boards (10) and a portion (33) forming a predetermined angle with the former.

3. A device as claimed in claim 2, characterized in that the angled portions (33) of two adjacent plates are on opposite side with respect to the supporting arm (31).

4. A device as claimed in claim 2 or 3, characterized in that said predetermined angle is about 60°.

5. A device as claimed in claim 1, characterized in that said eccentric means comprises a first disk (21) and a second (25) disk both located outside the side walls of the main tank (6) and joined to a first connecting rod (23) at points different from the disk centers, and in that said wave dividing means comprises an elongated body (15) provided with openings (16), and said motor (17) drives said first eccentric disk (21) through at least a belt and pulley transmission (18, 19).

6. A device as claimed in claim 5, characterized in that a second connecting rod (24) is joined between said first (21) and second (25) eccentric disks at points that are angularly staggered with respect to the joining points of said first connecting rod (23).

7. A device as claimed in claim 6, characterized in that said points are angularly staggered with respect to the joining points of said first connecting rod (23) by about 90°.

8. A device as claimed in claim 1, characterized in that said eccentric means comprises a first disk (21) and a second (25) disk both located outside either the front wall or the rear wall of the main tank (6), and in that said wave dividing means comprises an elongated body (15) provided with openings (16), said elongated body (15) being coupled by a pair of parallel bars (30) to a longitudinal body (29) which in turn is eccentrically connected to said two disks (21, 25) that are driven by said motor (17) through at least a belt (26).

9. A device as claimed in claims 5 to 8, characterized in that said openings (16) are arranged to form a grid.

10. A device as claimed in any claims 1 to 9, characterized in that the speed of said motor (17) is adjustable.

11. A device as claimed in claim 5, characterized in that the eccentricity of said eccentric means is about 2.5 mm.

**Patentansprüche**

1. Eine Vorrichtung zum Wellenschweissen von gedruckten Leiterplatten, wo eine Welle verschmolzener Leigierung, welche am Ausgang eines von zwei frontseitigen Wänden (7, 8) gebildeten Ständers erzeugt wird, (6) die genannten Leiterplatten (1) sowie die eingebauten Komponenten durchfliesst, einschliesslich die Mittel am Ausgang des genannten Ständers, zum Trennen mindestens eines Abschnittes der Schweisswelle und eine Mehrzahl von elementaren Strahlen, davon gekennzeichnet, dass sich der genannte Ständer innerhalb eines Hilfsbehälters zum Legierungssammeln befindet, der von zwei nach unten zusammenlaufenden Wänden (12, 13) gebildet ist und mit dem Hauptlegierungsschacht (4) über Oeffnungen (14) in Verbindung ist; das mittlere Legierungsniveau des genannten Sammelbehälters (12, 13) ist höher als das Niveau des genannten Hauptbehälters (6);

und davon gekennzeichnet, dass sich der genannte Wellentrennmittel innerhalb der Schweisswelle befindet und dass er ferner mindestens ein verlängerths Element (31, 23) umfaßt, das mit exzentrischen Mitteln verbunden ist, welche von einem Motor zum Erteilen der Umlaufbewegung an jeden der genannten elementaren Strahlen gesteuert werden.

2. Eine Vorrichtung, wie im Anspruch 1, davon gekennzeichnet, dass das genannte verlängerte Element (31) von einem Arm dargestellt ist, der eine Mehrzahl von Formblechen (32) trägt und einen Abschnitt umfasst, der sich auf einer Ebene befindet, welche zu der Fläche der gedruckten Leiterplatten (10) wesentlich orthogonal ist, und einen Abschnitt umfasst(33) der einen bestimmten Winkel zu der Formvorrichtung bildet.

3. Eine Vorrichtung wie im Anspruch 2, davon gekennzeichnet, daß die Winkelabschnitte (33) von zwei naheliegenden Platten sich auf der entgegengesetzten Seite befinden, im Vergleich zum Tragarm (31).

4. Eine Vorrichtung wie im Anspruch 2 oder 3, davon gekennzeichnet, daß der genannte festgestellte Winkel ca. 60° beträgt.

5. Eine Vorrichtung wie im Anspruch 1, davon gekennzeichnet, daß der genannte exzentrische Mittel eine erste Scheibe (21) und eine zweite (25) enthält, die sich beide außerhalb der Seitenwand des Hauptbehälters (6) befinden und mit einer ersten Pleuelstange (23) an verschiedenen Stellen als die Scheibenzentren verbunden sind, und davon gekennzeichnet, daß der genannte Wellentrennmittel einen verlängerten Körper (15) enthält, der Oeffnungen (16) aufweist, und daß der genannte Motor (17) die genannte erste exzentrische Scheibe (21) mindestens durch einen Riemenantrieb (18, 19) steuert.

6. Eine Vorrichtung wie im Anspruch 5, davon gekennzeichnet, daß eine zweite Pleuelstange (24) zwischen der genannten ersten (21) und zweiten (25) exzentrischen Scheibe an Stellen verbunden ist, die im Vergleich zu den Anschlußstellen der genannte ersten Pleuelstange (23)winkelverschoben ist.

7. Eine Vorrichtung wie im Anspruch 6, davon gekennzeichnet, daß die genannten Stellen im Vergleich zu den Anschlußstelleb der genannten ersten Pleuelstange (23) um ca. 90° verschoben sind.

8. Eine Vorrichtung wie im Ansruch 1, davon gekennzeichnet, dass der genannte exzentrische Mittel eine erste Scheibe (21) und eine zweite (25) enthält, die sich beide ausserhalb entweder der Frontwand oder der Hinterwand der Hauptbehälters (6), und davon gekennzeichnet, dass der genannte Wellentrennmittel einen verlängerten Körper (15) enthält, der Oeffnungen aufweist (16); der genannte verlängerte Körper (15) wird von einem Paar parallelen Stangen (30) mit einem Längskörper (29) verbunden, der mit den genannten zwei Scheiben (21, 25) wahlweise exzentrisch verbunden ist, welche von dem genannten Motor (17) durch mindestens einen Riemen (26) gesteuert sind.

9. Eine Vorrichtung wie in den Ansprüchen von 5 bis 8, davon gekennzeichnet, dass die genannte Oeffnungen (16) so aufgelegt sind, ein Gitter zu bilden.

10. Eine Vorrichtung wie in den Ansprüchen von 1 bis 9, davon gekennzeichnet, dass die Drehzahl des genannten Motors (17) regelbar ist.

11. Eine Vorrichtung wie im Anspruch 5, davon gekennzeichnet, dass die Exzentrizität des genannten exzentrischen Mittels ca. 2.5 mm beträgt.

**Revendications**

1. Un dispositif pour le soudage per inondation de tableaux à circuits imprimés, dans lequel une onde d'ailliage fondu, émis à la sortie d'un passage délimité par deux parois revêtues (7, 8) dans un puits d'alliage (6), à l'aide de moyens de pompage va inoder lesdits tableaux (1) ainsi que les éléments montés sur les mêmes, prévoyant des moyens situés à la sortie dudit passage pour la séparation d'au moins une partie de l'onde de soudage en une pluralité de jets élémentaires, caractérisé par le fait que ledit passage se trouve à l'intérieur d'un réservoir collecteur d'ailliage auxiliaire formé par deux parois supplémentaires qui convergent vers le bas (12, 13) et mises en communication avec le puits d'ailliage principal (4) à travers des ouvertures (14), le niveau moyen de l'ailliage dans ledit réservoir collecteur (12, 13) étant plus haut que le niveau dans ledit réservoir principal (6);

et par le fait que lesdits moyens de séparation de l'onde sont situés à l'intérieur de l'onde de soudage et en outre ils comprennent au moins une rallonge (31, 23) reliée aux excentriques actionnés par un moteur pour l'imposition d'un mouvement orbital à chacun desdits jets élémentaires.

2. Un dispositif comme il est dit à la revendication 1, caractérisé par le fait que ladite rallonge (31) se compose d'un bras muni d'une pluralité de plaques façonnées (32) dont une partie se trouve sur un plan essentiellement orthogonal aux surfaces desdits tableaux à circuit imprimés (10) et une seconde partie (33) forme un angle préétabli avec la première.

3. Un dispositif comme il est dit à la revendication 2, caractérisé par le fait que les parties en angle (33) de deux plaques adjacentes se trouvent sur l'angle opposé par rapport au bras de support (31).

4. Un dispositif comme il est dit à la revendication 2 ou 3, caractérisé par le fait que cet angle préétabli est d'env. 60°.

5. Un dispositif comme il est dit à la revendication 1, caractérisé par le fait que lesdits excentriques comprennent un premier disque (21) et un deuxième disque (25), les deux situés à l'extérieur des parois latérales du réservoir principal (6) et unis à une première bielle (23) à des points différents des centres des disques, et par le fait que lesdits moyens de séparation de l'onde comprennent une rallonge (15) munie d'ouvertures (16) et que ledit moteur (17) actionne ledit premier excentrique (21) à l'aide d'au moins une courroie et une poulie de transmission (18, 19).

6. Un dispositif comme il est dit à la revendication 5, caractérisé par le fait qu'une deuxième bielle (24) s'unit auxdits premier (21) et deuxième (25) disques excentriques à des points qui sont angulairement décalés par rapport aux points de jonction de ladite première bielle (23).

7. Un dispositif comme il est dit à la revendication 6, caractérisé par le fait que lesdits points sont angulairement décalés d'env. 90° par rapport aux points de jonction de ladite première bielle (33).

8. Un dispositif comme il est dit à la revendication 1, caractérisé par le fait que lesdits excentriques comprennent un premier disque (21) et un deuxième disque (25), les deux situés à l'extérieur soit de la paroi avant soit de la paroi arrière du réservoir principal (6), et par le fait que lesdits moyens de séparation de l'onde comprennent une rallonge (15) munie d'ouvertures (16), ladite rallonge (15) étant reliée, au moyen d'un couple de barres parallèles (30), à un élément longitudinal (29) qui à son tour est excentriquement relié aux deux disques (21, 25) qui sont actionnés par ledit moteur (17) à l'aide d'au moins une courroie (26).

9. Un dispositif comme il est dit aux revendications 5 à 8, caractérisé par le fait que lesdites ouvertures (16) sont placées de façon à former une grille.

10. Un dispositif comme il est dit à toutes les revendications de 1 à 8, caractérisé par le fait que la vitesse dudit moteur (17) est régable.

11. Un dispositif comme il est dit à la revendication 5, caractérisé par le fait que l'excentricité desdits excentriques est env. 2,5 mm.

fig.1

fig. 2 a

fig. 2 b

fig. 4a

fig. 4b

fig.5

fig.6

fig.3

fig.7

fig.8